# EUROPEAN PATENT SPECIFICATION

(11) **EP 3 726 881 B1**
(45) Date of publication and mention of the grant of the patent: **25.01.2023**
(21) Application number: 17936422.9
(22) Date of filing: 25.12.2017
(51) Int. Cl.: H04W 36/08, H04W 36/24, H04W 36/14, H04W 36/36, H04W 36/00

(54) **NOTIFICATION METHOD FOR RELEASING TERMINAL CONTEXT AND NETWORK DEVICE**
BENACHRICHTIGUNGSVERFAHREN ZUR FREIGABE EINES ENDGERÄTEKONTEXTES UND NETZWERKVORRICHTUNG
PROCÉDÉ DE NOTIFICATION DE LIBÉRATION DU CONTEXTE DE TERMINAL ET DISPOSITIF RÉSEAU

(43) Date of publication of application: 21.10.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN)
(74) Representative: Rossi, Ugo
(86) International application number: PCT/CN2017/118292
(87) International publication number: WO 2019/126938

(56) References cited:
- EP-A1- 2 941 071
- EP-A1- 2 947 953
- WO-A1-2015/115843
- WO-A1-2017/209951
- WO-A1-2017/209951
- CN-A- 102 244 905
- CN-A- 102 281 587
- CN-A- 103 139 851
- CN-A- 104 812 070

## Description

### Technical Field

The present invention relates to the technical field of information processing, in particular to a notification method for releasing a context of a terminal, and network nodes.

### Background

After a terminal establishes a connection with a first communication system, if it is for some reason, for example, some services are not supported in the first communication system, the terminal may try to access a second communication system for these services. For some terminals with certain capabilities, they can only communicate in one communication system at the same time. When the terminal accesses the second communication system, a network node of the first communication system does not know that the terminal is no longer in the first communication system, which will cause that the terminal and the network have asymmetric state information of the terminal. Related technologies include WO2015115843A1, US9462555B2 and EP2941071A1. WO2015115843A1 provides a method for maintenance and release of UE resources. A UE that transmits signals requests release of radio resources configured to the UE. A radio network node releases radio resources configured to the UE for proximity-based service (ProSe). In US9462555B2, methods, systems, and devices for low power consumption in wireless communication systems are disclosed herein. An evolved node B (eNodeB) is configured to provide a connection reconfiguration message to user equipment (UE) connected to the eNodeB, the connection reconfiguration message configuring the UE to indicate a power preference. The eNodeB receives assistance information from the UE. The assistance information includes a low power preference indication and a timer length, wherein the timer length indicates a preferred duration for a low power mode. The eNodeB provides, in response to receiving the assistance information, a connection release message to the UE. The connection release message includes paging discontinuous reception (DRX) information that includes the timer length. In EP2941071A1, a radio network (6) and a radio terminal (4) are configured to, when the radio terminal (4) is using a first cell (10) served by a first radio station (1) as a primary cell and a second cell (20) served by a second radio station (2) as a secondary cell, change the primary cell from the first cell (10) to a third cell (30) served by a third radio station (3) while keeping communication status information regarding the radio terminal (1) on the second cell (20). It is thus, for example, possible to enable a communication service in the secondary cell to be continued even after the primary cell is changed when the primary cell is changed during execution of carrier aggregation (e.g., Inter-eNB CA) on a plurality of cells served by different radio stations.

### Summary

To solve the above technical problem, embodiments of the present invention provide a notification method for releasing a context of a terminal, and network node according to the appended independent claims, and further improvement and embodiments are provided in the dependent claims.

According to technical solutions of embodiments of the present invention, when a terminal switches from one network node or communication system to another network node or communication system, a first notification may be sent to the network node or communication system originally accessed by the terminal, so that the originally accessed network node or communication system releases a context of the terminal. In this way, a problem that the originally accessed network or node still maintains the context of the terminal when the terminal has accessed another system is avoided, such that the network nodes or systems adopting the above solutions achieve an effect of symmetrical state information of the terminal.

### Brief Description of Drawings

FIG. 1 is a schematic flowchart one of a notification method for releasing a context of a terminal.
FIG. 2 is a schematic flowchart two of a notification method for releasing a context of a terminal.
FIG. 3 is a schematic diagram of structure of a first network node.
FIG. 4 is a schematic diagram of structure of a second network node.
FIG. 5 is a schematic diagram of a hardware architecture.

### Detailed Description

The invention is further described in present embodiments one and three, only. The other embodiments are listed for illustrative purpose, only.

To understand features and technical contents of embodiments of the present invention in more detail, implementations will be described in detail below with reference to the drawings, which are used for reference only and are not intended to limit the embodiments of the present invention.

### Embodiment one, according to present invention

An embodiment of the present invention provides a notification method for releasing a context of a terminal, applied to a first network node. The method includes: when a terminal switches from accessing a second network node to accessing the first network node or when the terminal switches from accessing a second communication system to accessing a first communication system, the first network node sends a first notification to the second communication node or the second communication system; wherein, the first notification is at least used for notifying the second communication system or the second network node to release the context of the terminal; when the terminal accesses the second communication system or the second network node, there is a connection between the terminal and the second communication system or the second network node, and the context of the terminal is stored in the second communication system or the second network node.

In addition, the first network node is located in the first communication system. The second network node may be located in the first communication system, or in another communication system, for example, may be located in the second communication system.

Specifically, the embodiment of the present invention provides the following two processing scenarios.

### Scenario one, according to the invention:

When a terminal switches from accessing a second network node to accessing a first network node, the first network node sends a first notification to the second network node; wherein, the first notification is at least used for notifying the second network node to release a context of the terminal, when the terminal accesses the second network node, the context of the terminal is stored in the second network node.

Herein, the terminal establishes a connection with the second network node when accessing the second network node.

A trigger condition for the terminal to switch access is that the terminal finds the second network node currently serving the terminal cannot meet a requirement of the terminal, thus the terminal switches to the first network node that can meet the usage requirement of the terminal.

It should be pointed out that the above first network node and second network node may belong to the same communication system or belong to different communication systems respectively. The first and second network nodes may be core network nodes or access network nodes or the like.

Further, when the terminal switches from accessing the second network node to accessing the first network node, the method further includes acquiring identification information of the second network node reported by the terminal.

In addition, the method further includes acquiring a second notification sent from the terminal, wherein the second notification is used for indicating to send the first notification to the second network node.

The first notification further includes identification information of the terminal. Herein, the identification information of the terminal includes IMSI or IMEI.

The second notification further includes a cause value. Herein, the cause value is used for indicating a reason for triggering to send the first notification to the second communication system or the second network node. That is, the reason for releasing a connection and a context of the terminal is carried in the second notification message, the reason is that the terminal has left the second network node.

Further, the method of sending the first notification to the second network node may include: sending the first notification to the second network node through an interface with the second network node; or, sending the first notification to the second network node through a third party node.

Herein, the interface between the first network node and the second network node may be a physical interface or a wireless interface, which is not limited here.

The third party node is a network element connected both with the first communication network and with the second communication network; or, the third party node is a network element connected both with the first network node and with the second network node.

For example, the third party node may be a core network element or an access network element or an operation and maintenance network element that is connected with the first and second network nodes.

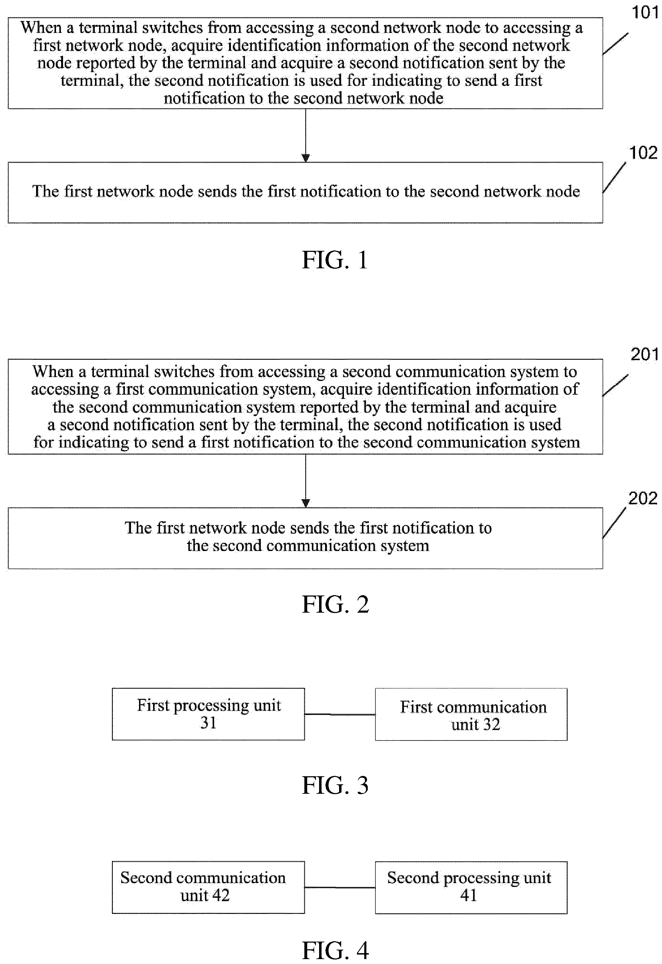

This scenario may be as shown in FIG. 1, which includes acts 101 and 102.

In act 101, when a terminal switches from accessing a second network node to accessing a first network node, identification information of the second network node reported by the terminal is acquired, and a second notification sent by the terminal is acquired; the second notification is used for indicating to send a first notification to the second network node.

In act 102, the first network node sends the first notification to the second network node.

### Scenario two, according to the invention

When a terminal switches from accessing a second communication system to accessing a first communication system, a first network node sends a first notification to the second communication system; wherein, the first notification is at least used for notifying the second communication system to release a context of the terminal; when the terminal accesses the second communication system, the context of the terminal is stored in the second communication system.

Herein, when accessing the second communication system, the terminal establishes a connection with a network node in the second communication system. It should be pointed out that in this scenario, when the connection with the second communication system is established, the connection may be established with a second network node in the second communication system, or the connection may be established with a network node other than the second network node in the second communication system, which is not specifically limited.

A trigger condition for the terminal to switch an accessed communication system is that the terminal finds the second communication system currently serving the terminal cannot meet a requirement of the terminal, thus the terminal switches to the first communication system that can meet the usage requirement of the terminal. Here, the meeting the requirement of the terminal may be that the terminal may need to access a certain service while the service, such as 4G, is not provided by the existing second communication system, and the terminal will switch to access the first communication system, such as LTE. It may be understood that the foregoing is only a trigger example, and in fact, there may be other ways, which are not exhaustively enumerated in the present embodiment.

It should be pointed out that the first communication system and the second communication system support different communication standards and/or support at least partially different service types. Specifically, the first and second communication systems may be 3GPP cellular network systems such as a 5G system or a 4G system, or non-3GPP systems such as WLAN. The first and second network nodes may be core network nodes or access network nodes or the like.

Further, when the terminal switches from accessing the second communication system to accessing the first communication system, the method includes acquiring identification information of the second communication system reported by the terminal.

Here, the reported identification information of the second communication system may be a reported identification of the second communication system, or reported identification information of the second network node, which establishes a connection with the terminal, in the second communication system, as long as the originally accessed second communication system can be represented.

In addition, the method further includes acquiring a second notification sent from the terminal, and the second notification is used for indicating to send the first notification to the second communication system.

The first notification further includes identification information of the terminal. Herein, the identification information of the terminal includes IMSI or IMEI.

The second notification further includes a cause value. Herein, the cause value is used for indicating a reason for triggering to send the first notification to the second communication system or the second network node. That is, the reason for releasing a connection and a context of the terminal is carried in the second notification message, the reason is that the terminal has left the second network node.

Further, the method of sending the first notification to the second communication system may include: sending the first notification to the second communication system through an interface with the second communication system; or, sending the first notification to the second communication system through an interface with a network node of the second communication system; wherein, the interface of the network node of the second communication system may be an interface of an edge device via which the second communication system acquires information sent from other devices or other networks; or, sending the first notification to the second network node through a third party node.

The third party node is a network element connected both with the first communication network and with the second communication network; or, the third party node is a network element connected both with the first network node and with the second network node. For example, the third party node may be a core network element or an access network element or an operation and maintenance network element that is connected with the first and second network nodes.

This scenario may be as shown in FIG. 2, which includes acts 201 and 202.

In act 201, when a terminal switches from accessing a second communication system to accessing a first communication system, identification information of the second communication system reported by the terminal is acquired and a second notification sent by the terminal is acquired; the second notification is used for indicating to send a first notification to the second communication system.

In act 202, the first network node sends the first notification to the second communication system.

It can be seen that by adopting the above solution, when a terminal switches from one network node or communication system to another network node or communication system, a first notification may be sent to the network node or communication system originally accessed by the terminal, so that the originally accessed network node or communication system releases a connection or releases a context of the terminal. In this way, a problem that the originally accessed network or node still maintains the context of the terminal when the terminal has connected to another system is avoided, such that the network nodes or systems adopting the above solution achieve an effect of symmetrical state information of the terminal.

### Embodiment two, not according to present invention and only for illustrative purposes:

An embodiment, listed here for illustrative purposes, provides a notification method for releasing a context of a terminal, applied to a second network node. The method includes: when a terminal switches from accessing a second communication system to accessing a first communication system or when a terminal switches from accessing a second network node to accessing a first network node, the second network node receives a first notification sent from the first communication system or the first network node; wherein, the first notification is at least used for notifying to release a context of the terminal; when the terminal accesses the second communication system or the second network node, there is a connection between the terminal and the second communication system or the second network node, and the context of the terminal is stored in the second communication system or the second network node.

In addition, the first network node is located in the first communication system. The second network node may be located in the first communication system, or in another communication system, for example, may be located in the second communication system.

Specifically, when the terminal switches from accessing the second network node to accessing the first network node, the first network node sends the first notification to the second network node. Herein, the first notification is at least used for notifying the second network node to release the context of the terminal; when the terminal accesses the second network node, the context of the terminal is stored in the second network node.

Herein, the terminal establishes a connection with the second network node when accessing the second network node.

A trigger condition for the terminal to switch access is that the terminal finds the second network node currently serving the terminal cannot meet a requirement of the terminal, thus the terminal switches to the first network node that can meet the usage requirement of the terminal.

It should be pointed out that the above first network node and second network node may belong to the same communication system or belong to different communication systems respectively.

The first network node is a network node of a core network or an access network in the first communication system, and the second network node is a network node of a core network or an access network in the second communication system.

In the present embodiment, the second network node may be a node located in the second communication system. Of course, the second network node may be a node located in the first communication network. Correspondingly, the first network node may be located in the first communication system or the second communication system.

The first communication system and the second communication system support different communication standards and/or support at least partially different service types. Specifically, the first and second communication systems may be 3GPP cellular network systems such as a 5G system or a 4G system, or non-3GPP systems such as WLAN. The first and second network nodes may be core network nodes or access network nodes or the like.

Further, receiving the first notification sent from the first communication system or the first network node includes: receiving the first notification through an interface with the first communication system; or, receiving the first notification through an interface connected with the first network node; or, receiving the first notification through a third party node.

Herein, the interface between the first network node and the second network node may be a physical interface or a wireless interface, which is not limited here.

Further, after the second network node of the second communication system receives the first notification sent from the first network node of the first communication system, the method further includes that the second network node notifies a third network node that stores a connection of the terminal or the context of the terminal to release the connection of the terminal or release the context of the terminal.

That is, when the third network node stores the connection of the terminal or the context of the terminal, the second network node may act as a forwarding node, and control the third network node to release the connection of the terminal or release the context of the terminal based on the first notification.

The third party node is a network element connected both with the first communication network and with the second communication network; or, the third party node is a network element connected both with the first network node and with the second network node. For example, the third party node may be a core network element or an access network element or an operation and maintenance network element that is connected with the first and second network nodes.

It can be seen that by adopting the above solution, when a terminal switches from one network node or communication system to another network node or communication system, a first notification is sent to the network node or communication system originally accessed by the terminal, so that the originally accessed network node or communication system releases a connection or releases a context of the terminal. In this way, a problem that the originally accessed network or node still maintains the context of the terminal when the terminal has connected to another system is avoided, such that the network nodes or systems adopting the above solution achieve an effect of symmetrical state information of the terminal.

### Embodiment three

An embodiment of the present invention provides a first network node. As shown in FIG. 3, the first network node includes a first processing unit 31, which, when a terminal switches from accessing a second network node to accessing the first network node or when the terminal switches from accessing a second communication system to accessing a first communication system, controls a first communication unit to send a first notification to the second network node or the second communication system; and the first communication unit 32, which sends the first notification to the second network node or the second communication system.

Herein, the first notification is at least used for notifying the second communication system or the second network node to release a context of the terminal. When the terminal accesses the second communication system or the second network node, there is a connection between the terminal and the second communication system or the second network node, and the context of the terminal is stored in the second communication system or the second network node.

In addition, the first network node is located in the first communication system. The second network node may be located in the first communication system or in another communication system, for example, may be located in the second communication system.

Specifically, the embodiment of the present invention provides the following two processing scenarios.

### Scenario one

When a terminal switches from accessing a second network node to accessing the first network node, the first processing unit 31 sends a first notification to the second network node through the first communication unit 32; wherein the first notification is at least used for notifying the second network node to release a context of the terminal; when the terminal accesses the second network node, the context of the terminal is stored in the second network node.

Herein, the terminal establishes a connection with the second network node when accessing the second network node.

A trigger condition for the terminal to switch access is that the terminal finds the second network node currently serving the terminal cannot meet a requirement of the terminal, thus the terminal switches to the first network node that can meet the usage requirement of the terminal.

It should be pointed out that the above first network node and second network node may belong to the same communication system or belong to different communication systems respectively. The first and second network nodes may be core network nodes or access network nodes or the like.

Further, when the terminal switches from accessing the second network node to accessing the first network node or when the terminal switches from accessing the second communication system to accessing the first communication system, the first processing unit acquires the identification information of the second network node reported by the terminal through the first communication unit 32.

In addition, when the terminal switches from accessing the second network node to accessing the first network node or when the terminal switches from accessing the second communication system to accessing the first communication system, the first processing unit acquires the second notification sent from the terminal through the first communication unit 32, and the second notification is used for indicating to send the first notification to the second network node.

The first notification further includes identification information of the terminal. Herein, the identification information of the terminal includes IMSI, IMEI or other information as long as the terminal can be uniquely identified.

The second notification further includes a cause value, wherein the cause value is used for indicating a reason for triggering to send the first notification to the second communication system or the second network node. That is, the reason for releasing a connection and the context of the terminal is carried in the second notification message, the reason is that the terminal has left the second network node.

Further, the first communication unit 32 sends the first notification to the second network node through an interface with the second network node; or, sends the first notification to the second network node through a third party node.

Herein, the interface between the first network node and the second network node may be a physical interface or a wireless interface, which is not limited here.

The third party node is a network element connected both with the first communication network and with the second communication network; or, the third party node is a network element connected both with the first network node and with the second network node. For example, the third party node may be a core network element or an access network element or an operation and maintenance network element that is connected with the first and second network nodes.

### Scenario two

When a terminal switches from accessing a second communication system to accessing a first communication system, the first processing unit sends a first notification to the second communication system through the first communication unit. Herein, the first notification is at least used for notifying the second communication system to release a context of the terminal, and when the terminal accesses the second communication system, the context of the terminal is stored in the second communication system.

Herein, when accessing the second communication system, the terminal establishes a connection with a network node in the second communication system. It should be pointed out that in this scenario, when the connection with the second communication system is established, the connection may be established with a second network node in the second communication system, or the connection may be established with a network node other than the second network node in the second communication system, which is not specifically limited.

A trigger condition for the terminal to switch an accessed communication system is that the terminal finds the second communication system currently serving the terminal cannot meet a requirement of the terminal, thus the terminal switches to the first communication system that can meet the usage requirement of the terminal. The meeting the requirement of the terminal here may be that the terminal may need to access a certain service, while the service, such as 4G, is not provided in the existing second communication system, and the terminal will switch to access the first communication system, such as LTE. It can be understood that the foregoing is only a trigger example, in fact, there may be other ways, but it is not exhaustively enumerated in the present embodiment.

It should be pointed out that the first communication system and the second communication system support different communication standards and/or support at least partially different service types. Specifically, the first and second communication systems may be 3GPP cellular network systems such as a 5G system or a 4G system, or non-3GPP systems such as WLAN. The first and second network nodes may be core network nodes or access network nodes or the like.

Further, when the terminal switches from accessing the second communication system to accessing the first communication system, the first processing unit acquires identification information of the second communication system reported by the terminal through the first communication unit.

Here, the reported identification information of the second communication system may be reported identification of the second communication system or reported identification information of the second network node, which establishes the connection with the terminal, in the second communication system, as long as the originally accessed second communication system can be represented.

In addition, when the terminal switches from accessing the second network node to accessing the first network node or when the terminal switches from accessing the second communication system to accessing the first communication system, the first processing unit acquires a second notification sent from the terminal through the first communication unit, and the second notification is used for indicating to send the first notification to the second communication system.

The first notification further includes identification information of the terminal. Herein, the identification information of the terminal includes IMSI, IMEI or other information as long as the terminal can be uniquely identified.

The second notification further includes a cause value, wherein the cause value is used for indicating a reason for triggering to send the first notification to the second communication system or a second network node. That is, the reason for releasing the connection and the context of the terminal is carried in the second notification message, the reason is that the terminal has left the second network node.

Further, the method of sending the first notification to the second communication system may include: sending the first notification to the second communication system through an interface with the second communication system; or, sending the first notification to the second communication system through an interface with a network node of the second communication system; wherein, the interface of the network node of the second communication system may be an interface of an edge device via which the second communication system acquires information sent from other devices or other networks; or, sending the first notification to the second network node through a third party node.

The third party node is a network element connected both with the first communication network and with the second communication network; or, the third party node is a network element connected both with the first network node and with the second network node.

For example, the third party node may be a core network element or an access network element or an operation and maintenance network element that is connected with the first and second network nodes.

It can be seen that by adopting the above solution, when a terminal switches from one network node or communication system to another network node or communication system, a first notification can be sent to the network node or communication system originally accessed by the terminal, so that the originally accessed network node or communication system releases a connection or releases a context of the terminal. In this way, a problem that the originally accessed network or node still maintains the context of the terminal when the terminal has connected to another system is avoided, thus the network nodes or systems adopting the above solution achieve an effect of symmetrical state information of the terminal.

### Embodiment four, not according to present invention

An embodiment of the present invention provides a second network node. As shown in FIG. 4, the second network node includes a second processing unit 41, which, when a terminal switches from accessing a second communication system to accessing a first communication system or when the terminal switches from accessing the second network node to accessing a first network node, receives a first notification sent from the first communication system or the first network node through a second communication unit; and the second communication unit 42, which receives the first notification sent from the first communication system or the first network node.

Herein, the first notification is at least used for notifying to release a context of the terminal. When the terminal accesses the second communication system or the second network node, there is a connection between the terminal and the second communication system or the second network node, and the context of the terminal is stored in the second communication system or the second network node.

In addition, the first network node is located in the first communication system. The second network node may be located in the first communication system or in another communication system, for example, may be located in the second communication system.

A trigger condition for the terminal to switch access may be that the terminal finds the second network node currently serving the terminal cannot meet a requirement of the terminal, thus the terminal switches to the first network node that can meet the usage requirement of the terminal.

It should be pointed out that the above first network node and second network node may belong to the same communication system or belong to different communication systems respectively.

The first network node is a network node of a core network or an access network in the first communication system.

The second network node is a network node of a core network or an access network in the second communication system.

In the present embodiment, the second network node may be a node located in the second communication system. Of course, the second network node may be a node located in the first communication network. Correspondingly, the first network node may be located in the first communication system or the second communication system.

The first communication system and the second communication system support different communication standards and/or support at least partially different service types. Specifically, the first and second communication systems may be 3GPP cellular network systems such as a 5G system or a 4G system, or non-3GPP systems such as WLAN. The first and second network nodes may be core network nodes or access network nodes or the like.

Further, the second communication unit 42 receives a first notification through an interface with the first communication system; or, receives the first notification through an interface connected with the first network node; or, receives the first notification through a third party node.

Herein, the interface between the first network node and the second network node may be a physical interface or a wireless interface, which is not limited here.

Further, after the second network node of the second communication system receives the first notification sent from the first network node of the first communication system, the second communication unit 42 notifies a third network node that stores a connection or the context of the terminal to release the connection of the terminal or release the context of the terminal.

That is, when the connection of the terminal or the context of the terminal is stored in the third network node, the second network node may act as a forwarding node, and control the third network node to release the connection of the terminal or release the context of the terminal based on the first notification.

The third party node is a network element connected both with the first communication network and with the second communication network; or, the third-party node is a network element connected both with the first network node and with the second network node.

For example, the third party node may be a core network element or an access network element or an operation and maintenance network element that is connected with the first and second network nodes.

It can be seen that by adopting the above solution, when a terminal switches from one network node or communication system to another network node or communication system, a first notification can be sent to the network node or communication system originally accessed by the terminal, so that the originally accessed network node or communication system releases a connection or releases a context of the terminal. In this way, a problem that the originally accessed network or node still maintains the context of the terminal when the terminal has connected to another system is avoided, thus the network nodes or systems adopting the above solution achieve an effect of symmetrical state information of the terminal.

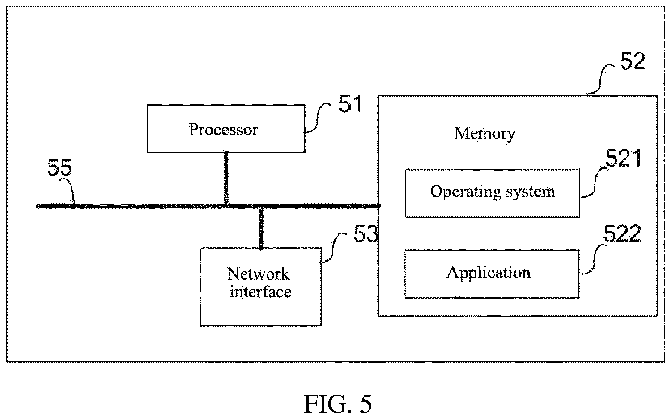

The embodiments in FIG. 5 are not according to the invention and are present for illustration purposes only. An embodiment of the present invention further provides an architecture of hardware composition of the first network node or second network node, which includes at least one processor 51, a memory 52, and at least one network interface 53, as shown in FIG. 5. Various components are coupled together by a bus system 54. It may be understood that the bus system 54 is used for implementing connections and communications between these components. In addition to a data bus, the bus system 54 includes a power bus, a control bus, and a status signal bus. However, for clarity, all kinds of buses are uniformly referred to as the bus system 54 in the FIG. 5.

It should be understood that the memory 52 in the embodiment of the present invention may be a volatile memory or a non-volatile memory, or it may include both volatile and non-volatile memory.

In some implementations, the memory 52 stores following elements, executable modules or data structures, or subsets thereof, or extended sets thereof: operating system 521 and application 522.

Herein, the processor 51 is configured to be capable of processing acts of the methods in the embodiment one or the embodiment one, and the acts are not described repeatedly here.

An embodiment of the present invention provides a computer storage medium storing computer executable instructions, and when the computer executable instructions are executed, the acts of the methods in the embodiment one or the embodiment two are implemented.

The above device in the embodiments of the present invention may also be stored in a computer readable storage medium when it is implemented in the form of a software function module and sold or used as an independent product. Based on this understanding, the technical solutions in the embodiments of the present invention, in essence, or the part contributing to the prior art, may be embodied in the form of a software product stored in a storage medium, including several instructions for causing a computer device (which may be a personal computer, a server, or a network device, etc.) to perform all or part of the methods in various embodiments of the present invention. The aforementioned storage medium includes a U disk, a mobile hard disk, a read-only memory (ROM), a magnetic disk or an optical disk, and another media capable of storing program codes. Thus, the embodiments of the present invention are not limited to any specific combination of hardware and software.

Correspondingly, an embodiment of the present invention further provides a computer storage medium in which a computer program is stored, and the computer program is configured to execute the data scheduling method in the embodiments of the present invention, this embodiment is not in the scope of the claims.

## Claims

1. A notification method for releasing a context of a terminal, performed by a first network node, the method comprising:
sending (102, 202), by the first network node, a first notification to a second network node or a second communication system when a terminal finds the second network node currently serving the terminal cannot meet a requirement of the terminal and therefor switches from accessing the second network node to accessing the first network node or when the terminal switches from accessing the second communication system to accessing a first communication system;
wherein the first notification is at least used for notifying the second communication system or the second network node to release the context of the terminal; and
when the terminal switches from accessing the second network node to accessing the first network node or when the terminal switches from accessing the second communication system to accessing the first communication system, the method further comprises:
acquiring identification information of the second communication system or the second network node reported by the terminal (101, 201);
wherein sending (102, 202), by the first network node, the first notification is based on an acquired second notification sent by the terminal, the second notification is used for indicating the first network node to send the first notification to the second communication system or the second network node (101, 201);
wherein the second notification further comprises a cause value, wherein the cause value is used for indicating a reason for triggering the first network node to send the first notification to the second communication system or the second network node,
**characterized in that** the first notification further comprises identification information of the terminal, the identification information of the terminal comprises International Mobile Subscriber Identity, IMSI, or International Mobile Equipment Identity, IMEI; and
the cause value comprised in the second notification is used for indicating to the first network the reason that the terminal has left the second network node.

2. The method of claim 1, wherein sending the first notification to the second network node or the second communication system comprises:
sending the first notification to the second communication system through an interface with the second communication system; or,
sending the first notification to the second communication system through an interface with a network node of the second communication system; or,
sending the first notification to the second network node through an interface with the second network node; or,
sending the first notification to the second communication system or the second network node through a third party node.

3. The method of claim 2, wherein the third party node is a network element connected both with the first communication network and with the second communication network; or,
the third party node is a network element connected both with the first network node and with the second network node.

4. A first network node, comprising means to carry out the method of claim 1.

5. The first network node of claim 4, wherein the first network node is a network node of a core network or an access network in a first communication system.

## Patentansprüche

1. Benachrichtigungsverfahren zum Freigeben eines Kontexts eines Endgeräts, durchgeführt durch einen ersten Netzknoten, wobei das Verfahren Folgendes umfasst:
Senden (102, 202), durch den ersten Netzknoten, einer ersten Benachrichtigung an einen zweiten Netzknoten oder ein zweites Kommunikationssystem, wenn ein Endgerät feststellt, dass der zweite Netzknoten, der das Endgerät aktuell bedient, eine Anforderung des Endgeräts nicht erfüllen kann und daher vom Zugriff auf den zweiten Netzknoten zum Zugriff auf den ersten Netzknoten umschaltet, oder wenn das Endgerät vom Zugriff auf das zweite Kommunikationssystem zum Zugriff auf ein erstes Kommunikationssystem umschaltet;
wobei die erste Benachrichtigung zumindest zum Benachrichtigen des zweiten Kommunikationssystems oder des zweiten Netzknotens zum Freigeben des Kontexts des Endgeräts verwendet wird; und
wobei das Verfahren, wenn das Endgerät vom Zugriff auf den zweiten Netzknoten zum Zugriff auf den ersten Netzknoten umschaltet oder wenn das Endgerät vom Zugriff auf das zweite Kommunikationssystem zum Zugriff auf das erste Kommunikationssystem umschaltet, ferner Folgendes umfasst:
Erfassen von durch das Endgerät gemeldeten Identifikationsinformationen des zweiten Kommunikationssystems oder des zweiten Netzknotens (101, 201) ;
wobei das Senden (102, 202), durch den ersten Netzknoten, der ersten Benachrichtigung auf einer durch das Endgerät gesendeten erfassten zweiten Benachrichtigung basiert, wobei die zweite Benachrichtigung zum Angeben des ersten Netzknotens zum Senden der ersten Benachrichtigung an das zweite Kommunikationssystem oder des zweiten Netzknotens verwendet wird (101, 201);
wobei die zweite Benachrichtigung ferner einen Ursachenwert umfasst, wobei der Ursachenwert zum Angeben eines Grunds zum Triggern des ersten Netzknotens zum Senden der ersten Benachrichtigung an das zweite Kommunikationssystem oder den zweiten Netzknoten verwendet wird,
**dadurch gekennzeichnet, dass** die erste Benachrichtigung ferner Identifikationsinformationen des Endgeräts umfasst, die Identifikationsinformationen des Endgeräts International Mobile Subscriber Identity, IMSI, oder International Mobile Equipment Identity, IMEI, umfassen; und
der in der zweiten Benachrichtigung enthaltene Ursachenwert dazu verwendet wird, dem ersten Netz den Grund dafür anzugeben, dass das Endgerät den zweiten Netzknoten verlassen hat.

2. Verfahren nach Anspruch 1, wobei das Senden der ersten Benachrichtigung an den zweiten Netzknoten oder das zweite Kommunikationssystem Folgendes umfasst:
Senden der ersten Benachrichtigung an das zweite Kommunikationssystem über eine Schnittstelle mit dem zweiten Kommunikationssystem; oder
Senden der ersten Benachrichtigung an das zweite Kommunikationssystem über eine Schnittstelle mit einem Netzknoten des zweiten Kommunikationssystems; oder
Senden der ersten Benachrichtigung an den zweiten Netzknoten über eine Schnittstelle mit dem zweiten Netzknoten; oder
Senden der ersten Benachrichtigung an das zweite Kommunikationssystem oder den zweiten Netzknoten über einen Drittparteienknoten.

3. Verfahren nach Anspruch 2, wobei der Drittparteienknoten ein Netzelement ist, das sowohl mit dem ersten Kommunikationsnetz als auch mit dem zweiten Kommunikationsnetz verbunden ist; oder
der Drittparteienknoten ein Netzelement ist, das sowohl mit dem ersten Netzknoten als auch mit dem zweiten Netzknoten verbunden ist.

4. Erster Netzknoten, umfassend Mittel zum Ausführen des Verfahrens nach Anspruch 1.

5. Erster Netzknoten nach Anspruch 4, wobei der erste Netzknoten ein Netzknoten eines Kernnetzes oder eines Zugangsnetzes in einem ersten Kommunikationssystem ist.

## Revendications

1. Procédé de notification pour la libération d'un contexte d'un terminal, réalisé par un premier noeud de réseau, le procédé comprenant :
l'envoi (102, 202), par le premier noeud de réseau, d'une première notification à un deuxième noeud de réseau ou un deuxième système de communication lorsqu'un terminal détermine que le deuxième noeud de réseau desservant à ce moment le terminal est incapable de répondre à un besoin du terminal et bascule ainsi de l'accès au deuxième noeud de réseau à l'accès au premier noeud de réseau, ou lorsque le terminal bascule de l'accès au deuxième système de communication à l'accès à un premier système de communication ;
la première notification étant au moins utilisée pour notifier au deuxième système de communication ou au deuxième noeud de réseau de libérer le contexte du terminal ; et
lorsque le terminal bascule de l'accès au deuxième noeud de réseau à l'accès au premier noeud de réseau ou lorsque le terminal bascule de l'accès au deuxième système de communication à l'accès au premier système de communication, le procédé comprenant en outre :
l'acquisition d'informations d'identification du deuxième système de communication ou du deuxième noeud de réseau signalées par le terminal (101, 201) ;
l'envoi (102, 202), par le premier noeud de réseau, de la première notification étant basé sur une deuxième notification acquise envoyée par le terminal, la deuxième notification étant utilisée pour indiquer au premier noeud de réseau d'envoyer la première notification au deuxième système de communication ou au deuxième noeud de réseau (101, 201) ;
la deuxième notification comprenant en outre une valeur de cause, la valeur de cause étant utilisée pour indiquer une raison du déclenchement de l'envoi, par le premier noeud de réseau, de la première notification au deuxième système de communication ou au deuxième noeud de réseau,
**caractérisé en ce que** la première notification comprend en outre des informations d'identification du terminal, les informations d'identification du terminal comprenant une Identité Internationale d'Abonné Mobile, IMSI, ou une Identité Internationale d'Équipement Mobile, IMEI ; et
la valeur de cause contenue dans la deuxième notification est utilisée pour indiquer au premier réseau la raison pour laquelle le terminal a quitté le deuxième noeud de réseau.

2. Procédé selon la revendication 1, dans lequel l'envoi de la première notification au deuxième noeud de réseau ou au deuxième système de communication comprend :
l'envoi de la première notification au deuxième système de communication par l'intermédiaire d'une interface avec le deuxième système de communication ; ou,
l'envoi de la première notification au deuxième système de communication par l'intermédiaire d'une interface avec un noeud de réseau du deuxième système de communication ; ou,
l'envoi de la première notification au deuxième noeud de réseau par l'intermédiaire d'une interface avec le deuxième noeud de réseau ; ou,
l'envoi de la première notification au deuxième système de communication ou au deuxième noeud de réseau par l'intermédiaire d'un noeud tiers.

3. Procédé selon la revendication 2, dans lequel le noeud tiers est un élément de réseau connecté à la fois au premier réseau de communication et au deuxième réseau de communication ; ou,
le noeud tiers est un élément de réseau connecté à la fois au premier noeud de réseau et au deuxième noeud de réseau.

4. Premier noeud de réseau, comprenant des moyens de mise en œuvre du procédé selon la revendication 1.

5. Premier noeud de réseau selon la revendication 4, le premier noeud de réseau étant un noeud de réseau d'un coeur de réseau ou d'un réseau d'accès dans un premier système de communication.
